# EUROPEAN PATENT APPLICATION

(11) **EP 2 314 152 A1**
(43) Date of publication of application: **27.04.2011**
(21) Application number: 09797525.4
(22) Date of filing: 12.03.2009
(51) Int. Cl.: A01G 7/00

(54) **PROCEDURE FOR DECORATING CACTUS AND OBJECT THUS OBTAINED**

(30) Priority: 16.07.2008 ES 200802115
(71) Applicant: Vera Carvajal, José, 29566 Casarabonela - Malaga (ES)
(72) Inventor: Vera Carvajal, José, 29566 Casarabonela - Malaga (ES)
(74) Representative: Urizar Anasagasti, Jesus Maria
(86) International application number: PCT/ES2009/070060
(87) International publication number: WO 2010/007190

(57) **Abstract**

The invention relates to a process for decorating cactus and object thus obtained after applying, by means of a paintbrush, 2-3 layers -total dry thickness of about 200 µm-of a ductile and harmless solution to the plant, consisting of distilled water and acrylic paint with a photoluminescent effect, in a proportion of 18-20%, on the areolas and glochids of the plant, preferably from the Cactaceae family, after cleaning the surface of the cactus of impurities, oils and greases by using a soft bristle brush, the cactus thus being capable of absorbing and storing light within it and, when placed in a dark place, emitting light, for ornamental purposes.

## Description

### Object of the Invention

The process for decorating cactus and object thus obtained, object of the present invention, relates to cactus which, after properly applying thereon an aqueous solution of paint, is capable of absorbing and storing light within it and, when placed in a dark place, emitting light, for ornamental purposes.

### Background of the Invention

The applicant is not aware of the existence of this process applied on vegetable plants or decorated cactus for ornamental purposes by means of said process.

### Description of the Invention

The process for decorating cactus and object thus obtained proposed by the invention represents an obvious merely ornamental novelty within the field of application thereof because from using this process, luminosity is provided to cactus treated by means of this technique.

To that end, phosphorescent acrylic paint is diluted in distilled water for the purpose of obtaining a sufficiently ductile paste to be applied on the plant and, given the amount of water that it has, harmless for such plant, while at the same time the performance of the paint used is optimized, reducing costs. Likewise, since the mixture is fixed on the glochids -thin beard-like hairs which originate from the areolas of certain cactus- it prevents the glochids from easily detaching from the plant, with the subsequent reduction of the risk of them adhering to the skin and the irritation caused upon contact.

Since it is acrylic paint, the paste dries rapidly; once dried, this paint is water-resistant, which allows the scant irrigation that these plants need.

In addition, and before applying the described paste, the surface of the cactus to be treated is cleaned to facilitate the fixing of the paint, by means of a soft bristle brush, to avoid deterioration of the plant.

Once the obtained paste is applied and after it has dried, the layer of phosphorescent paint is responsible for absorbing light and subsequently producing, in a dark place, a delayed light re-radiation for ornamental purposes.

### Preferred Embodiment of the Invention

To carry out the process for decorating cactus and object thus obtained, acrylic paint with a photoluminescent effect is diluted in distilled water in a proportion of 18-20%, obtaining a sufficiently ductile and harmless aqueous solution.

In addition, and before applying the described aqueous solution, the surface of the cactus to be treated is cleaned of impurities, oils and greases by means of a soft bristle brush.

Subsequently, 2-3 layers of the solution obtained are applied, by means of a paintbrush, on the areolas and glochids of the plant, preferably from the Cactaceae family, with a total dry thickness of about 200 µm, which allows maintaining the phosphorescence for a certain time period, being very intense in the first 10-15 minutes.

After the aqueous solution applied on the mentioned parts of the cactus has dried, which occurs rapidly, the layer of luminescent paint is responsible for absorbing light, activating the phosphorescent molecules and producing a delayed light re-radiation in dark places.

The phosphorescence depends on the luminous intensity received but not on the light exposure time. An especially interesting effect occurs upon illuminating in a concealed manner with an ultraviolet (Black) light.

Having sufficiently described the nature of the present invention as well as a way of putting it into practice, it remains to be added that it is possible to introduce changes in shape, materials and arrangement in it as a whole and in the parts forming it, provided that said changes do not substantially alter the features of the invention as claimed below:

## Claims

1. A process for decorating cactus, **characterized by** applying, by means of a paintbrush, 2-3 layers -total dry thickness of about 200 µm- of a solution consisting of distilled water and acrylic paint with a photoluminescent effect, in a proportion of 18-20%, on the areolas and glochids of the plant, preferably from the Cactaceae family, after cleaning the surface of the cactus of impurities, oils and greases by using a soft bristle brush.

2. The decorated cactus according to the process of claim 1, **characterized by** the phosphorescent effect occurring in the areolas and glochids thereof in the dark.
